# EUROPEAN PATENT SPECIFICATION

(11) **EP 4 214 910 B1**
(45) Date of publication and mention of the grant of the patent: **29.07.2026**
(21) Application number: 20954300.8
(22) Date of filing: 21.09.2020
(51) Int. Cl.: H04L 41/00, G06F 13/10, G06F 21/10, G06F 21/62, G06F 9/4401, G06F 21/57

(54) **FUNCTION ACTIVATION**
FUNKTIONSAKTIVIERUNG
ACTIVATION DE FONCTION

(43) Date of publication of application: 26.07.2023
(73) Proprietor: Hewlett-Packard Development Company, L.P., Spring TX 77389 (US)
(72) Inventor: ZHANG, Peter Siyuan, Spring, Texas 77389 (US); LIU, Wei Ze, Spring, Texas 77389 (US); WANG, Lan, Spring, Texas 77389 (US)
(74) Representative: Hoffmann Eitle
(86) International application number: PCT/US2020/051819
(87) International publication number: WO 2022/060374

(56) References cited:
- WO-A1-2016/105719
- US-A- 6 167 511
- US-A1- 2003 005 133
- US-A1- 2008 098 210
- US-A1- 2009 217 374
- US-A1- 2012 131 345
- US-A1- 2015 074 815
- US-B1- 6 978 385

## Description

### BACKGROUND

Electronic technology has advanced to become virtually ubiquitous in society and has been used to improve many activities in society. For example, electronic devices are used to perform a variety of tasks, including work activities, communication, research, and entertainment. Different varieties of electronic circuits may be utilized to provide different varieties of electronic technology.

US 2015/0074815 A1 discloses license management of firmware-controllable features in computer systems. A computer system includes: a plurality of hardware modules having a plurality of features capable of selective activation; firmware-based controllers distributed among the plurality of hardware modules having control points to control activation of the plurality of features; and a management module to obtain license data and communicate with the firmware-based controllers to configure the control points to activate at least one of the plurality of features as permitted by the license data.

US 2012/0131345 A1 discloses provisioning a license and an application program from a first server to a computing platform over a network. The host application derives a symmetric key at least in part from a user password, and sends the license to a license management firmware component of a security engine, in a message signed by the symmetric key. The license management firmware component derives the symmetric key at least in part from the user password stored in a secure storage of the security engine, verifies the signature on the message using the symmetric key, verifies the first server's signature on the license, decrypts the license using a first private key of the license management firmware component corresponding to the first public key to obtain the second key, and sends the second key to the host application, which decrypts the application program using the second key.

### SUMMARY

The present invention provides an electronic device, in accordance with claim 1.

The present invention also provides an electronic device, in accordance with claim 6.

The present invention also provides a non-transitory tangible computer-readable medium, in accordance with claim 12.

### BRIEF DESCRIPTION OF THE DRAWINGS

Various examples will be described below by referring to the following figures.
FIG. 1 is a block diagram illustrating an example of an electronic device that may be utilized for function enrollment and activation;
FIG. 2 is a block diagram illustrating another example of an electronic device that may be utilized for function enrollment and activation;
FIG. 3 is a block diagram illustrating an example of a computer-readable medium for function enrollment and activation;
FIG. 4 is a call flow diagram illustrating an example for enrolling a function on an electronic device; and
FIG. 5 is a call flow diagram illustrating an example for activating a function on an electronic device.

Throughout the drawings, identical or similar reference numbers may designate similar, but not necessarily identical, elements. The figures are not necessarily to scale, and the size of some parts may be exaggerated to more clearly illustrate the example shown. Moreover, the drawings provide examples in accordance with the description; however, the description is not limited to the examples provided in the drawings.

### DETAILED DESCRIPTION

In some examples, an electronic device may have the capability to perform a function. For example, the electronic device may be built with certain hardware and/or software functionality to perform an operation. In another example, a computer may be built (e.g., during manufacturing) with the ability to perform a function. As used herein, a function refers to functionality of the electronic device. For example, a function may include hardware functionality, software functionality or a combination of hardware and software functionality.

In some examples, it may be desirable to activate the function based on the fulfillment of particular criteria. For example, activation of a function on a particular electronic device may be based on a payment (e.g., one-time payment or periodic subscription payments) to access the function. In other examples, activation of the function may be based on a particular user of the electronic device, the location of the electronic device, movement of the electronic device, and so forth.

Some examples of challenges with selectively authorizing and activating a function on an electronic device include ensuring that criteria are met before the function is activated. In other examples, some challenges with function activation include ensuring that authorization to activate the function remains secure, remains coupled to a particular electronic device, and persists after reinstallation or modification of an operating system and/or other programming of the electronic device.

Examples for enabling a function in an electronic device are described herein. These examples may include two processes: an enrollment process and an activation process.

In the enrollment process, a processor of the electronic device may request a unique identifier of the electronic device from a basic input/output system (BIOS) of the electronic device. The processor may then send the unique identifier to a server. The server may determine whether criteria (e.g., payment) have been met to activate the function on the electronic device. The server may create an enrollment message based on the received unique identifier, may sign the enrollment message with a private key, and may send the enrollment message back to the processor of the electronic device. In some examples, upon receiving the enrollment message, the processor may send the enrollment message to the BIOS. The BIOS may verify the enrollment message using a stored public key. If the enrollment message is valid, then the BIOS may store the enrollment message in a BIOS memory (e.g., via a Serial Peripheral Interface (SPI)) or may send the enrollment message to a controller (e.g., an embedded controller) for storage in a secure controller memory.

In the activation process, the processor may send a function activation request to the BIOS. In some examples, the processor may communicate with the BIOS using a private Windows Management Instrumentation (WMI) interface. The BIOS may locate the enrollment message in memory and may verify the enrollment message using the stored public key. If verified, then the BIOS may return a function activation response (e.g., via a private WMI call) indicating that the enrollment has been done based on the enrollment message. The processor may then activate (e.g., enable) the requested function.

In some examples, an electronic device may be a device that includes electronic circuitry. For instance, an electronic device may include integrated circuitry (e.g., transistors, digital logic, semiconductor technology, etc.). Examples of electronic devices include computing devices, laptop computers, desktop computers, smartphones, tablet devices, wireless communication devices, game consoles, game controllers, smart appliances, printing devices, vehicles with electronic components, aircraft, drones, robots, smart appliances, etc.

As used herein, a BIOS refers to hardware or hardware and instructions to initialize, control, or operate an electronic device prior to execution of an operating system (OS) of the electronic device. Instructions included within a BIOS may be software, firmware, microcode, or other programming that defines or controls functionality or operation of a BIOS. In one example, a BIOS may be implemented using instructions, such as platform firmware of an electronic device, executable by a processor. A BIOS may operate or execute prior to the execution of the OS of an electronic device. A BIOS may initialize, control, or operate components such as hardware components of an electronic device and may load or boot the OS of the electronic device.

In some examples, a BIOS may provide or establish an interface between hardware devices or platform firmware of the electronic device and an OS of the electronic device, via which the OS of the electronic device may control or operate hardware devices or platform firmware of the electronic device. In some examples, a BIOS may implement the Unified Extensible Firmware Interface (UEFI) specification or another specification or standard for initializing, controlling, or operating an electronic device.

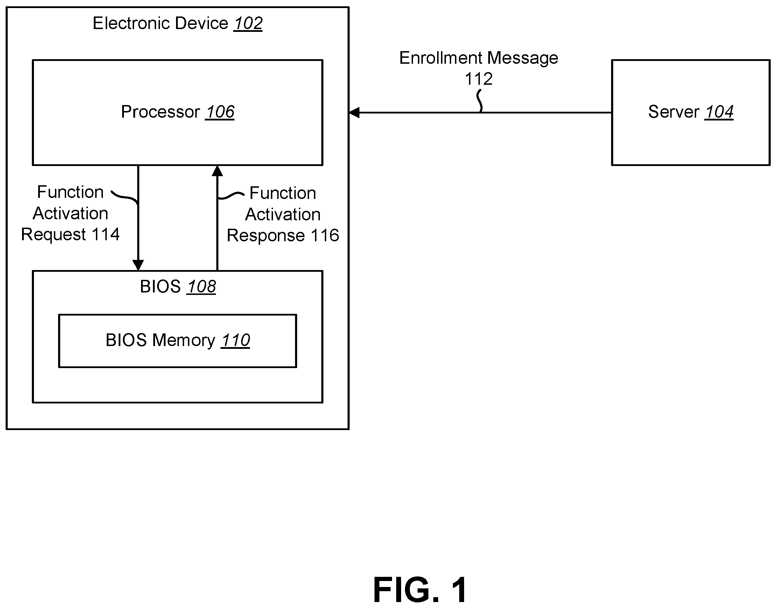

FIG. 1 is a block diagram illustrating an example of an electronic device 102 that may be utilized for function enrollment and activation. Examples of the electronic device 102 may include computing devices, laptop computers, desktop computers, tablet devices, cellular phones, smartphones, wireless communication devices, game consoles, gaming controllers, smart appliances, printing devices, vehicles with electronic components, aircraft, drones, robots, smart appliances, etc.

In some examples, the electronic device 102 may include a processor 106 and a BIOS 108. The processor 106 may be any of a central processing unit (CPU), a semiconductor-based microprocessor, graphics processing unit (GPU), field-programmable gate array (FPGA), an application-specific integrated circuit (ASIC), and/or other hardware device suitable for retrieval and execution of instructions stored in a memory (not shown). The processor 106 may fetch, decode, and/or execute instructions stored in the memory. While a single processor 106 is shown in FIG. 1, in other examples, the processor 106 may include multiple processors (e.g., a CPU and a GPU).

The memory (e.g., BIOS memory 110) may be any electronic, magnetic, optical, and/or other physical storage device that contains or stores electronic information (e.g., instructions and/or data). The memory may be, for example, Random Access Memory (RAM), Electrically Erasable Programmable Read-Only Memory (EEPROM), Dynamic Random Access Memory (DRAM), Synchronous DRAM (SDRAM), magnetoresistive random-access memory (MRAM), phase change RAM (PCRAM), non-volatile random-access memory (NVRAM), memristor, flash memory, a storage device, and/or an optical disc, etc. In some examples, the memory may be a non-transitory tangible computer-readable storage medium, where the term "non-transitory" does not encompass transitory propagating signals. The processor 106 may be in electronic communication with the memory. In some examples, a processor 106 and/or memory of the electronic device 102 may be combined with or separate from a processor (e.g., CPU) and/or memory of a host device.

In some examples, the electronic device 102 may include different sets of memory. For example, the processor 106 may store particular information (e.g., instructions executed by the processor 106) in a first memory. The BIOS 108 may store other information (e.g., instructions executed by the BIOS 108) in a BIOS memory 110.

In some examples, the electronic device 102 may have the capability to implement a function. The function may include hardware functionality and/or programming functionality (e.g., software, firmware, microcode, or other programming) to perform an operation on the electronic device 102. It should be noted that the electronic device 102 may be capable of implementing the function before the function is activated. For instance, the electronic device 102 may include hardware and/or software used to implement the function before the access to use the function is granted. In some examples, the electronic device 102 may not download additional programming (e.g., software and/or a firmware update) to activate the function. In an example, the electronic device 102 may be a computer in which the components (e.g., hardware and/or software) used to implement the function are installed during the manufacture of the electronic device 102. Therefore, before a user seeks access to the function, the components (e.g., hardware and/or software) used to implement the function are already present on the electronic device 102.

The function may be activated and/or deactivated based on particular criteria. In some examples, activation of the function on the electronic device 102 may be based on payment for access to the function. For example, a user may make a one-time payment or may pay a periodic subscription fee to activate the function on the electronic device 102. Other criteria that may be used to activate or deactivate the function may include the geographic location of the electronic device 102, the user of the electronic device 102, movement of the electronic device 102, etc.

In some examples, the function may include hardware and/or software functionality. An example of a function that may be activated or deactivated is noise cancellation of a microphone of the electronic device 102. For example, a notebook computer may have the capability to perform noise cancellation of its microphone. However, the electronic device 102 may be capable of an advanced noise cancellation function, such as customizing the noise cancellation based on the environment (e.g., room size, background noise source such as air conditioning, etc.). Another example of a hardware function that may be activated or deactivated includes advanced functionality of a camera on the electronic device 102. Yet another example of a hardware function that may be activated or deactivated includes advanced functionality of speakers on the electronic device 102.

Another example of a function that may be activated or deactivated may include on feature or a set of features in a program. For example, a digital image editing program may be installed on the electronic device 102. The digital image editing program may include a basic set of functionality. The digital image editing program may also include an advanced set of functions that may be locked by default, but may be activated based on payment.

Yet another example of a function that may be activated or deactivated may include an entire program. For example, a program (e.g., antivirus, word processor, digital media editor, etc.) may be installed on the electronic device 102. However, access to the program may be blocked unless criteria (e.g., payment for access) are met.

To enable the function, a user may pay a monthly subscription or a one-time payment. For example, a user may go on a website, provide a unique identifier for the electronic device 102, select the function, and make the payment. The function may then be enabled on the electronic device 102. Examples for enrollment and activation of the function are described herein.

In some examples, the electronic device 102 may communicate with a server 104. For example, the electronic device 102 may communicate with the server 104 over a network connection (e.g., an internet connection). The server 104 may authorize a function on the electronic device 102 based on criteria (e.g., payment).

An enrollment process may be performed to authorize activation of a function on the electronic device 102. For example, the processor 106 may implement an application, service, driver, or other program that supports (e.g., may perform) the function. Before activating the function, the processor 106 may perform an enrollment process for the function.

The processor 106 may send a request to the BIOS 108 for a unique identifier of the electronic device 102. For example, the processor 106 may make a private WMI call to the BIOS 108 requesting the unique identifier of the electronic device 102. In some examples, the unique identifier may be a serial number, a universally unique identifier (UUID) or other information used to identify the electronic device 102. The BIOS 108 may retrieve the unique identifier and send the unique identifier to the processor 106.

The processor 106 may send an enrollment request to the server 104 that includes the unique identifier of the electronic device 102. For example, the processor 106 may send the enrollment request to a website hosted by the server 104 over a secure internet connection. The server 104 may enroll (e.g., authorize) the function on the electronic device 102 based on the unique identifier received in the enrollment request. For example, the server 104 may determine whether the unique identifier qualifies for activation of the function. In some examples, enrollment of the function may be based on meeting particular criteria. For example, the server 104 may determine that payment (e.g., a one-time payment or subscription fee) for access to the function has been received. The server 104 may link a payment to the unique identifier for the electronic device 102. Therefore, in this example, if payment is made for access to the function on the electronic device 102 associated with the unique identifier, then the server 104 may authorize access to the function on the electronic device 102.

In some examples, a key pair may be used to sign and verify an enrollment message 112. The server 104 may store a private key and the BIOS 108 may store a corresponding public key. Upon determining that the unique identifier of the electronic device 102 qualifies for activation of the function, the server 104 may create an enrollment message 112 based on the unique identifier. The enrollment message 112 may indicate that the electronic device 102 with the unique identifier is authorized to activate the function. In some examples, the server 104 may sign the enrollment message 112 using the private key stored on the server 104. In other words, the enrollment message 112 may include a signature signed with a private key stored on the server 104. The server 104 may then send the enrollment message 112 back to the processor 106 of the electronic device 102.

Upon receiving the enrollment message 112, the processor 106 may send the enrollment message 112 to the BIOS 108. For example, the processor 106 may make a private WMI call to the BIOS 108 to transmit the enrollment message 112 to the BIOS 108.

Upon receiving the enrollment message 112 from the processor 106, the BIOS 108 may verify the enrollment message 112. For example, the BIOS 108 may attempt to decrypt the signature of the enrollment message 112 using the stored public key. If the BIOS 108 is able to decrypt the signed enrollment message 112, then the BIOS 108 may determine that the enrollment message 112 is valid.

The BIOS 108 may store the enrollment message 112 in the BIOS memory 110. For example, the BIOS 108 may store the enrollment message 112 in response to verifying the signature of the enrollment message 112 with the public key stored in the BIOS memory 110. In some examples, the BIOS memory 110 may be a secure memory available to the BIOS 108 (e.g., System Management Mode (SMM) memory). In some examples, the BIOS 108 may store the enrollment message 112 as a UEFI variable in the BIOS memory 110. Upon storing the enrollment message 112, the enrollment process for the function on the electronic device 102 may be complete.

In an activation process, the function may be activated or deactivated on the electronic device 102 based on the enrollment message 112. For example, the processor 106 (e.g., an application, service, driver, or other program implemented by the processor 106) may seek access to the function. The processor 106 may send a function activation request 114 to the BIOS 108. In some examples, the processor 106 may send the function activation request 114 to the BIOS 108 in a private WMI call.

Upon receiving the function activation request 114 from the processor 106, the BIOS 108 may retrieve the enrollment message 112 from the BIOS memory 110. For example, the BIOS 108 may locate the enrollment message 112 using a UEFI variable service.

The BIOS 108 may verify the enrollment message 112 to determine whether the function is enrolled (e.g., authorized) to be activated on the electronic device 102. For example, the BIOS 108 may verify the signature of the enrollment message 112 based on the public key stored by the BIOS 108. If the BIOS 108 determines that the enrollment message 112 is valid, then the BIOS 108 may determine that the function is authorized for activation on the electronic device 102.

In some examples, the BIOS 108 may send a function activation response 116 to the processor 106 based on verification of the enrollment message 112. For instance, the BIOS 108 may send a function activation response 116 to the processor 106 in response to verifying the signature of enrollment message 112. In some examples, the BIOS 108 may return the function activation response 116 to the processor 106 using a private WMI call.

The function activation response 116 may indicate whether the processor 106 is to enable (e.g., activate) the function or block access to the function. For example, if the BIOS 108 successfully validates the enrollment message 112, then the function activation response 116 may instruct the processor 106 to enable the function. However, if the BIOS 108 fails to verify the enrollment message 112, then the function activation response 116 may instruct the processor 106 to block access to the function.

In some examples, the BIOS memory 110 may be persistent memory that survives reinstallation of OS. By storing the enrollment message 112 in the BIOS memory 110, the enrollment of the function may be tied to a particular electronic device 102, even if the OS of the electronic device 102 is erased and reinstalled. Therefore, enrollment and activation of the feature may follow the electronic device 102. Even if programming (e.g., software) and/or the OS of the electronic device 102 is erased, the enrollment message 112 for the function may be retained in the persistent BIOS memory 110. A user may quickly enable a function without additional changes to the electronic device 102. Thus, additional firmware updates and/or additional account setup may be avoided.

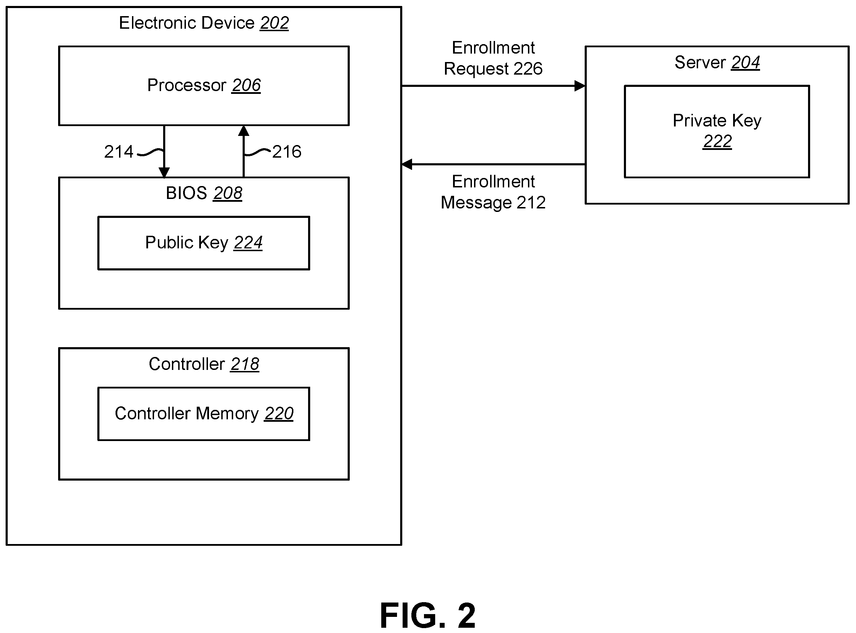

FIG. 2 is a block diagram illustrating another example of an electronic device 202 that may be utilized for function enrollment and activation. The electronic device 202 may be implemented in accordance with the electronic device 102 described in FIG. 1. For example, the electronic device 202 may include a processor 206 and a BIOS 208 as described in FIG. 1.

In some examples, the electronic device 202 may include a controller 218. In some examples, the controller 218 may be a microcontroller (e.g., embedded controller) that performs tasks on the electronic device 202. In some examples, the controller 218 may perform tasks that the processor 206 and/or BIOS 208 do not perform. In some examples, the controller 218 may include controller memory 220 (e.g., RAM, ROM) that is independent of memory used by the processor 206 and/or BIOS 208. For example, the controller memory 220 may be exclusively accessible by the controller 218.

In some examples, the electronic device 202 may enroll and activate a function. As described in FIG. 1, the processor 206 may initiate enrollment of the function by requesting a unique identifier (e.g., UUID, serial number, etc.) from the BIOS 208. In some examples, the processor 206 may send an enrollment request 226 to a server 204 over a secure connection (e.g., secure internet connection).

The server 204 may generate an enrollment message 212 in response to enrollment criteria being met. For example, the server 204 may authorize activation of the function based on payment for access to the function. If payment is made to enable the function on the electronic device 202, then the server 204 may generate an enrollment message 212 indicating that the function is authorized to be activated on the electronic device 202. In some examples, the enrollment message 212 may have the format as illustrated in Table-1.

**Table-1**

| |
|---|
| Message ID |
| Message Size |
| Serial Number |
| UUID |
| Expiration Date (optional) |
| Signature |

In Table-1, the "Message ID" may be a unique identifier for the enrollment message 212. "Message size" may be the size (e.g., in bytes) of the enrollment message 212. "Serial number" may be the serial number of the electronic device 202 seeking access to the function. "UUID" may be the UUID of the electronic device 202 seeking access to the function. The "Expiration date" may indicate a time period for the enrollment message 212. The "signature" may be the signature signed by the private key 222 stored by the server 204.

As illustrated in Table-1, the enrollment message 212 may include an expiration date. In some examples, the expiration date of the enrollment message 212 may be used to authorize activation of the function on the electronic device 202 for a limited time period. For example, the server 204 may authorize activation of the function based on a subscription for access to the function. The subscription may be for a particular time period (e.g., 1 week, 1 month, 3 months, 1 year, etc.). Therefore, the expiration date of the enrollment message 212 may reflect the time period of the subscription. Thus, the enrollment message 212 may include the expiration date for the subscription. In some examples, the expiration date may indicate a date through which the function is authorized to be activated on the electronic device 202. In examples where the enrollment message 212 does not include an expiration date, the function may be authorized indefinitely (e.g., without an expiration date).

In the example of FIG. 2, the processor 206 may receive the enrollment message 212 and may send the enrollment message 212 to the BIOS 208. For example, upon receipt of the enrollment message 212, the processor 206 may make a private WMI call to send the enrollment message 212 to the BIOS 208.

The BIOS 208 may verify the enrollment message 212 with the stored public key 224. If valid, the BIOS 208 may send the enrollment message 212 to the controller 218 for storage in the controller memory 220. In some examples, the controller 218 may store the enrollment message 212 using a private SPI. In some examples, the BIOS 208 and the controller 218 may communicate using a secure interface.

For activation of the function, the processor 206 may send a function activation request 214 to the BIOS 208. In this example, the BIOS 208 may send an enrollment message request to the controller 218 to retrieve the enrollment message 212 from the controller memory 220. Upon receiving the enrollment message 212 from the controller 218, the BIOS 208 may validate the signature of the enrollment message 212 with the stored public key 224. In some examples, the BIOS 208 may verify the enrollment message 212 based on the expiration date of the enrollment message 212. For example, the BIOS 208 may determine whether the enrollment message 212 is still within the valid time period as indicated by the expiration date.

The BIOS 208 may send a function activation response 216 to the processor 206 based on the verification of the enrollment message 212. For example, the BIOS 208 may send a function activation response 216 that authorizes activation of the function in response to verifying the signature of enrollment message 212. In other examples, the BIOS 208 may send a function activation response 216 that authorizes activation of the function in response to determining that the enrollment message 212 is still within the valid time period as indicated by the expiration date. In some examples, the BIOS 208 may send the function activation response 216 by returning the private WMI call from the processor 206.

In some examples, the function activation response 216 may include a function activation bit. In some examples, the function activation bit may be set to "0" if the function is to be blocked by the processor 206 and the function activation bit may be set to "1" if the function is to be activated by the processor 206.

An example use case is described herein. In this use case, a user may buy the electronic device 202 (e.g., a laptop computer) that has a built-in noise cancelling functionality for a speaker and microphone. The electronic device 202 is capable of a more advanced audio canceling function that is based on payment of a fee.

In this first use case, the user may open an application implemented by the processor 206 to request enrollment of the advanced audio canceling function. In some examples, the processor 206 may direct the user to a website hosted by the server 204. The processor 206 may provide the unique identifier of the electronic device 202 in an enrollment request 226. The user may select the advanced audio canceling function that is to be enrolled (e.g., activated) on the electronic device 202. The user may then make a payment for the advanced audio canceling function through the website. In some examples, the user may select the duration (e.g., the expiration date) for the advanced audio canceling function. In some examples, the expiration date may be based on a user-selected subscription for the advanced audio canceling function. The server 204 may then send the enrollment message 212 back to the processor 206 for storage on the controller memory 220 (or BIOS memory).

For activation of the advanced audio canceling function, the user may open an application that supports the advanced audio canceling function. The processor 206 (e.g., via the application opened by the user) may send a function activation request 214 (e.g., via a private WMI call) to the BIOS 208 to check whether the advanced audio canceling function is authorized for activation. If the BIOS 208 validates the stored enrollment message 212, then the BIOS 208 may send a function activation response 216 back to the processor 206 indicating that the advanced audio canceling function is authorized for activation. The processor 206 may activate the function with an expiration date, if applicable.

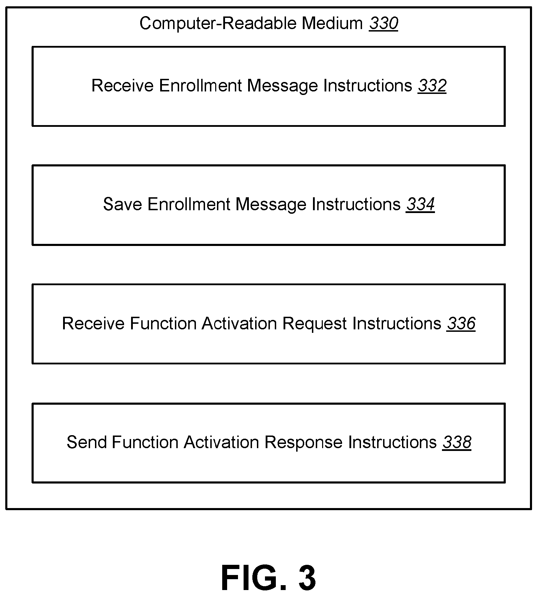

FIG. 3 is a block diagram illustrating an example of a computer-readable medium 330 for function enrollment and activation. The computer-readable medium 330 may be a non-transitory, tangible computer-readable medium 330. The computer-readable medium 330 may be, for example, RAM, EEPROM, a storage device, an optical disc, and the like. In some examples, the computer-readable medium 330 may be volatile and/or non-volatile memory, such as DRAM, EEPROM, MRAM, PCRAM, memristor, flash memory, and the like. In some examples, the computer-readable medium 330 described in FIG. 3 may be an example of memory for an electronic device 102 described in FIG. 1 or memory for an electronic device 202 described in FIG. 2. In some examples, code (e.g., data and/or executable code or instructions) of the computer-readable medium 330 may be transferred and/or loaded to memory or memories of the electronic device 102 or electronic device 202.

The computer-readable medium 330 may include code (e.g., data and/or executable code or instructions). For example, the computer-readable medium 330 may include receive enrollment message instructions 332, save enrollment message instructions 334, receive function activation request instructions 336 and/or send function activation response instructions 338.

In some examples, the receive enrollment message instructions 332 may be instructions that when executed cause a BIOS of the electronic device to receive, from a processor, an enrollment message for a function of the electronic device. The enrollment message may be sent to the processor from a server. In some examples, the processor may request, from the BIOS, a unique identifier for the electronic device stored in the BIOS memory. The processor may send an enrollment request for the function that includes the unique identifier to the server. The server may send the enrollment message in response to determining that the unique identifier qualifies for activation of the function. In some examples, this may be accomplished as described in FIGS. 1-2.

In some examples, the save enrollment message instructions 334 may be instructions that when executed cause the BIOS of the electronic device to save the enrollment message in a BIOS memory (or controller memory). In some examples, the enrollment message may include a signature signed with a private key stored on the server. The BIOS may store the enrollment message in response to verifying the signature of the enrollment message with a public key stored in the BIOS memory. In some examples, this may be accomplished as described in FIGS. 1-2.

In some examples, the receive function activation request instructions 336 may be instructions that when executed cause the BIOS of the electronic device to receive, from the processor, a function activation request. In some examples, the function activation request may be initiated upon selection of the function by an application, service, driver, or other program implemented by the processor that supports the function. In some examples, this may be accomplished as described in FIGS. 1-2.

In some examples, the send function activation response instructions 338 may be instructions that when executed cause the BIOS of the electronic device to send, to the processor, a function activation response based on verification of the enrollment message. In some examples, the BIOS may retrieve the enrollment message from the BIOS memory (or controller memory). The BIOS may verify the signature of the enrollment message based on the public key. The BIOS may send the function activation response to the processor in response to verifying the signature of enrollment message. In some examples, the function activation response may authorize activation of the function on the electronic device. In some examples, the BIOS may authorize activation of the function based on payment for access to the function, as indicated by the enrollment message. In other examples, the BIOS may authorize activation of the function based on a subscription for access to the function, as indicated by the enrollment message. In some examples, this may be accomplished as described in FIGS. 1-2.

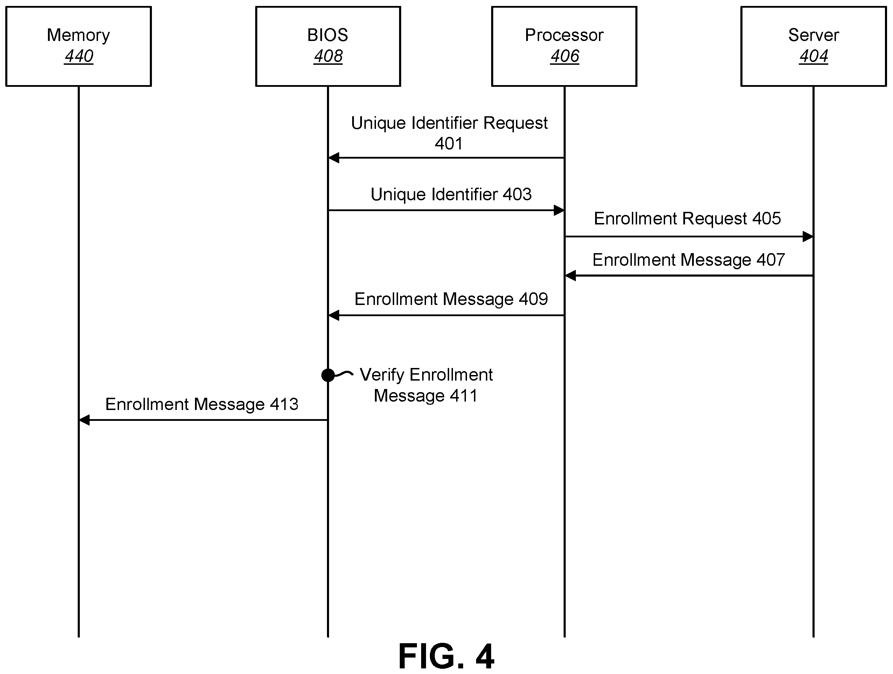

FIG. 4 is a call flow diagram illustrating an example for enrolling a function on an electronic device. At 401, the processor 406 of the electronic device may send a unique identifier request to the BIOS 408 of the electronic device. In response to the unique identifier request, at 403, the BIOS 408 may send the unique identifier (e.g., serial number, UUID) of the electronic device to the processor 406. At 405, the processor 406 may send an enrollment request to a server 404 over a secure network connection (e.g., internet connection).

The server 404 may determine whether the unique identifier qualifies for activation of the function. For example, the server 404 may authorize activation of the function based on payment or an authorization code for access to the function. In another example, the server 404 may authorize activation of the function based on a subscription for access to the function. At 407, the server 404 may send an enrollment message to the processor 406 in response to determining that the unique identifier of the electronic device qualifies for activation of the function.

At 409, upon receiving the enrollment message, the processor 406 may send the enrollment message to the BIOS 408. At 411, the BIOS 408 may verify the enrollment message. For example, the BIOS 408 may validate the signature of the enrollment message with a public key stored in the BIOS memory. If the BIOS 408 validates the enrollment message, then at 413, the BIOS 408 may send the enrollment message for storage in memory 440 (e.g., BIOS memory and/or controller memory).

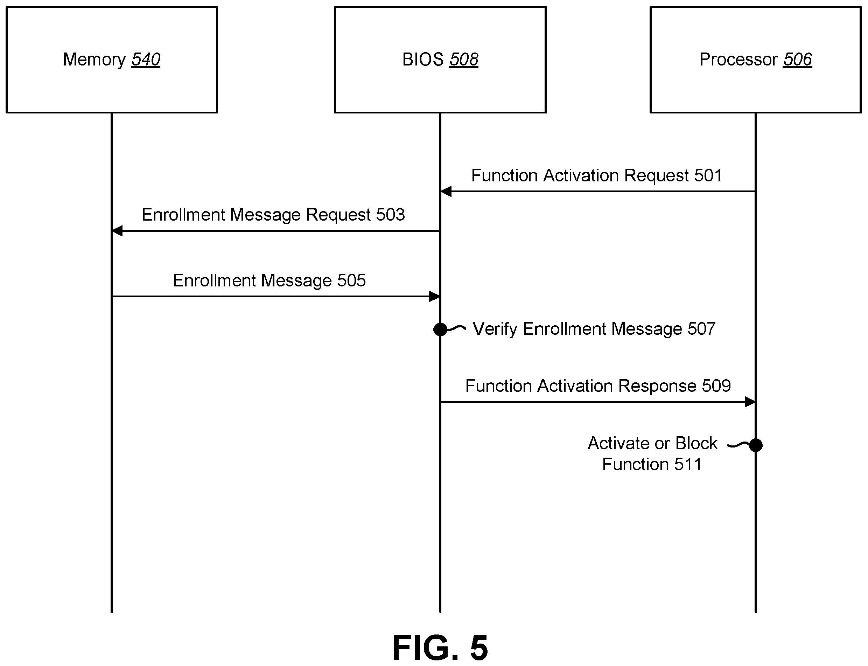

FIG. 5 is a call flow diagram illustrating an example for activating a function on an electronic device. At 501, the processor 506 of the electronic device may send a function activation request to a BIOS 508 of the electronic device. For example, an application, service, driver, or other program implemented by the processor 506 that supports the function may send the function activation request upon selection of the function.

At 503, the BIOS 508 may send an enrollment message request to memory 540 (e.g., BIOS memory and/or controller memory). For example, the enrollment message may be saved in the memory 540 as described in the enrollment process of FIG. 4. In response to the enrollment message request, at 505 the memory 540 may locate and send the enrollment message to the BIOS 508.

At 507, the BIOS 508 may verify the enrollment message. For example, the BIOS 508 may validate the signature of the enrollment message with a public key stored in the BIOS memory. At 509, the BIOS 508 may send a function activation response based on the verification of the enrollment message. For example, if the BIOS 508 validates the signature of the enrollment message with the public key and the expiration date of the enrollment message has not passed, then the function activation response may indicate that the function is to be activated. If the BIOS 508 fails to validate the signature of the enrollment message with the public key and/or the expiration date of the enrollment message has passed, then the function activation response may indicate that the function is to be blocked (e.g., deactivated). At 511, the processor 506 may activate or block the function based on the function activation response.

As used herein, the term "and/or" may mean an item or items. For example, the phrase "A, B, and/or C" may mean any of: A (without B and C), B (without A and C), C (without A and B), A and B (but not C), B and C (but not A), A and C (but not B), or all of A, B, and C.

While various examples are described herein, the disclosure is not limited to the examples. Variations of the examples described herein may be within the scope of the disclosure. For example, operations, functions, aspects, or elements of the examples described herein may be omitted or combined.

## Claims

1. An electronic device (102), comprising:
a basic input/output system, BIOS, (108); and
a processor (106) to:
receive an enrollment message (112) for a function of the electronic device (102) from a server (104); and
send the enrollment message (112) to the BIOS (108), wherein
the BIOS (108) is to:
store the enrollment message (112) in a BIOS memory (110);
verify the enrollment message (112) in response to a function activation request from the processor (106); and
send, to the processor (106), a function activation response based on verification of the enrollment message (112),
wherein the processor (106) is to enable the function on the electronic device (102) in a case where the function activation response from the BIOS (108) indicates that the verification of the enrollment message (112) is successful, thereby allowing the electronic device (102) to perform the enabled function.

2. The electronic device (102) of claim 1, wherein the processor (106) is to:
request, from the BIOS (108), a unique identifier for the electronic device (102) stored in the BIOS memory (110); and
send an enrollment request for the function that includes the unique identifier to the server (104), wherein the server (104) is to send the enrollment message (112) in response to determining that the unique identifier qualifies for activation of the function.

3. The electronic device (102) of claim 1, wherein the enrollment message (112) comprises a signature signed with a private key stored on the server (104).

4. The electronic device (102) of claim 3, wherein the BIOS (108) is to store the enrollment message (112) in response to verifying the signature of the enrollment message (112) with a public key stored in the BIOS memory (110).

5. The electronic device (102) of claim 1, wherein the processor (106) is to communicate with the BIOS (108) over a private Windows Management Instrumentation, WMI, interface.

6. An electronic device (202), comprising:
a processor (206);
a controller (218) comprising a controller memory (220); and
a basic input/output system, BIOS, (208) to:
receive, from the processor (206), an enrollment message (212) for a function of the electronic device (202), the enrollment message (212) being sent to the processor (206) from a server (204);
send the enrollment message (212) to the controller (218) for storage in the controller memory (220);
receive, from the processor (206), a function activation request;
verify the enrollment message (112) in response to the function activation request from the processor (206); and
send, to the processor (206), a function activation response based on verification of the enrollment message (212),
wherein the processor (206) is to enable the function on the electronic device (202) in a case where the function activation response from the BIOS (208) indicates that the verification of the enrollment message (212) is successful, thereby allowing the electronic device (202) to perform the enabled function.

7. The electronic device (202) of claim 6, wherein upon receiving the function activation request from the processor (206), the BIOS (208) is to:
retrieve the enrollment message (212) from the controller memory (220);
verify a signature of the enrollment message (212) based on a public key; and
send the function activation response to the processor (206) in response to verifying the signature of the enrollment message (212).

8. The electronic device (202) of claim 6, wherein the enrollment message (212) comprises an expiration date.

9. The electronic device (202) of claim 8, wherein the BIOS (208) is to verify the enrollment message (212) based on the expiration date.

10. The electronic device (202) of claim 6, wherein the processor (206) is to enable the function in response to verification of the enrollment message (212) by the BIOS (208).

11. The electronic device (202) of claim 6, wherein the processor (206) is to block access to the function in response to the BIOS (208) failing to verify the enrollment message (212).

12. A non-transitory tangible computer-readable medium comprising instructions when executed cause a basic input/output system, BIOS, (108) of an electronic device (102) to:
receive, from a processor (106) of the electronic device (102), an enrollment message (112) for a function of the electronic device (102), the enrollment message (112) being sent to the processor (106) from a server (104);
save the enrollment message (112) in a BIOS memory (110) of the electronic device (102);
receive, from the processor (106), a function activation request;
verify the enrollment message (112) in response to the function activation request from the processor (106); and
send, to the processor (106), a function activation response based on verification of the enrollment message (112),
wherein the processor (106) enables the function on the electronic device (102) in a case where the function activation response from the BIOS (108) indicates that the verification of the enrollment message (112) is successful, thereby allowing the electronic device (102) to perform the enabled function.

13. The non-transitory tangible computer-readable medium of claim 12, further comprising instructions when executed cause the BIOS (108) to authorize activation of the function based on payment for access to the function.

14. The non-transitory tangible computer-readable medium of claim 12, further comprising instructions when executed cause the BIOS (108) to authorize activation of the function based on a subscription for access to the function.

15. The non-transitory tangible computer-readable medium of claim 14, wherein the enrollment message (112) comprises an expiration date for the subscription.

## Patentansprüche

1. Elektronische Vorrichtung (102), die umfasst:
ein Eingabe-/Ausgabe-Grundsystem, BIOS, (108); und
einen Prozessor (106) zum:
Empfangen einer Registrierungsnachricht (112) für eine Funktion der elektronischen Vorrichtung (102) von einem Server (104); und
Senden der Registrierungsnachricht (112) an das BIOS (108), wobei das BIOS (108) dient zum:
Speichern der Registrierungsnachricht (112) in einem BIOS-Speicher (110);
Verifizieren der Registrierungsnachricht (112) als Reaktion auf eine Funktionsaktivierungsanforderung von dem Prozessor (106); und
Senden, an den Prozessor (106), einer Funktionsaktivierungsreaktion auf der Basis einer Verifizierung der Registrierungsnachricht (112),
wobei der Prozessor (106) dazu dient, die Funktion auf der elektronischen Vorrichtung (102) in einem Fall freizugeben, in dem die Funktionsaktivierungsreaktion von dem BIOS (108) anzeigt, dass die Verifizierung der Registrierungsnachricht (112) erfolgreich ist, wodurch der elektronischen Vorrichtung (102) ermöglicht wird, die freigegebene Funktion durchzuführen.

2. Elektronische Vorrichtung (102) nach Anspruch 1, wobei der Prozessor (106) dient zum:
Anfordern, von dem BIOS (108), eines eindeutigen Bezeichners für die elektronische Vorrichtung (102), der in dem BIOS-Speicher (110) gespeichert ist; und
Senden einer Registrierungsanforderung für die Funktion, die den eindeutigen Bezeichner einschließt, an den Server (104), wobei der Server (104) dazu dient, die Registrierungsnachricht (112) als Reaktion auf ein Bestimmen zu senden, dass der eindeutige Bezeichner für eine Aktivierung der Funktion geeignet ist.

3. Elektronische Vorrichtung (102) nach Anspruch 1, wobei die Registrierungsnachricht (112) eine Signatur, die mit einem auf dem Server (104) gespeicherten privaten Schlüssel signiert ist, umfasst.

4. Elektronische Vorrichtung (102) nach Anspruch 3, wobei das BIOS (108) dazu dient, die Registrierungsnachricht (112) als Reaktion auf ein Verifizieren der Signatur der Registrierungsnachricht (112) mit einem in dem BIOS-Speicher (110) gespeicherten öffentlichen Schlüssel zu speichern.

5. Elektronische Vorrichtung (102) nach Anspruch 1, wobei der Prozessor (106) dazu dient, mit dem BIOS (108) über eine private Schnittstelle für Windows Management Instrumentation, WMI, zu kommunizieren.

6. Elektronische Vorrichtung (202), die umfasst:
einen Prozessor (206);
einen Controller (218), der einen Controller-Speicher (220) umfasst; und
ein Eingabe-/Ausgabe-Grundsystem, BIOS, (208) zum:
Empfangen, von dem Prozessor (206), einer Registrierungsnachricht (212) für eine Funktion der elektronischen Vorrichtung (202), wobei die Registrierungsnachricht (212) von einem Server (204) an den Prozessor (206) gesendet wird;
Senden der Registrierungsnachricht (212) an den Controller (218) für eine Speicherung in dem Controller-Speicher (220);
Empfangen, von dem Prozessor (206), einer Funktionsaktivierungsanforderung;
Verifizieren der Registrierungsnachricht (112) als Reaktion auf die Funktionsaktivierungsanfrage von dem Prozessor (206); und
Senden, an den Prozessor (206), einer Funktionsaktivierungsreaktion auf der Basis einer Verifizierung der Registrierungsnachricht (212),
wobei der Prozessor (206) dazu dient, die Funktion auf der elektronischen Vorrichtung (202) in einem Fall freizugeben, in dem die Funktionsaktivierungsreaktion von dem BIOS (208) anzeigt, dass die Verifizierung der Registrierungsnachricht (212) erfolgreich ist, wodurch der elektronischen Vorrichtung (202) ermöglicht wird, die freigegebene Funktion durchzuführen.

7. Elektronische Vorrichtung (202) nach Anspruch 6, wobei das BIOS (208) bei einem Empfangen der Funktionsaktivierungsanforderung von dem Prozessor (206) dient zum:
Abrufen der Registrierungsnachricht (212) aus dem Controller-Speicher (220);
Verifizieren einer Signatur der Registrierungsnachricht (212) auf der Basis eines öffentlichen Schlüssels; und
Senden der Funktionsaktivierungsreaktion an den Prozessor (206) als Reaktion auf ein Verifizieren der Signatur der Registrierungsnachricht (212).

8. Elektronische Vorrichtung (202) nach Anspruch 6, wobei die Registrierungsnachricht (212) ein Ablaufdatum umfasst.

9. Elektronische Vorrichtung (202) nach Anspruch 8, wobei das BIOS (208) dazu dient, die Registrierungsnachricht (212) auf der Basis des Ablaufdatums zu verifizieren.

10. Elektronische Vorrichtung (202) nach Anspruch 6, wobei der Prozessor (206) dazu dient, die Funktion als Reaktion auf eine Verifizierung der Registrierungsnachricht (212) durch das BIOS (208) freizugeben.

11. Elektronische Vorrichtung (202) nach Anspruch 6, wobei der Prozessor (206) dazu dient, einen Zugang zu der Funktion als Reaktion darauf zu blockieren, dass das BIOS (208) daran scheitert, die Registrierungsnachricht (212) zu verifizieren.

12. Nichtflüchtiges greifbares computerlesbares Medium,
das Anweisungen umfasst, die, wenn sie ausgeführt werden, ein Eingabe/Ausgabe-Grundsystem, BIOS, (108) einer elektronischen Vorrichtung (102) veranlassen zum:
Empfangen, von einem Prozessor (106) der elektronischen Vorrichtung (102), einer Registrierungsnachricht (112) für eine Funktion der elektronischen Vorrichtung (102), wobei die Registrierungsnachricht (112) von einem Server (104) an den Prozessor (106) gesendet wird;
Speichern der Registrierungsnachricht (112) in einem BIOS-Speicher (110) der elektronischen Vorrichtung (102);
Empfangen, von dem Prozessor (106), einer Funktionsaktivierungsanforderung;
Verifizieren der Registrierungsnachricht (112) als Reaktion auf die Funktionsaktivierungsanfrage von dem Prozessor (106); und
Senden, an den Prozessor (106), einer Funktionsaktivierungsreaktion auf der Basis einer Verifizierung der Registrierungsnachricht (112),
wobei der Prozessor (106) die Funktion auf der elektronischen Vorrichtung (102) in einem Fall zu freigibt, in dem die Funktionsaktivierungsreaktion von dem BIOS (108) anzeigt, dass die Verifizierung der Registrierungsnachricht (112) erfolgreich ist, wodurch der elektronischen Vorrichtung (102) ermöglicht wird, die freigegebene Funktion durchzuführen.

13. Nichtflüchtiges greifbares computerlesbares Medium nach Anspruch 12, das ferner Anweisungen umfasst, die, wenn sie ausgeführt werden, das BIOS (108) veranlassen, eine Aktivierung der Funktion auf der Basis einer Zahlung für einen Zugang zu der Funktion zu autorisieren.

14. Nichtflüchtiges greifbares computerlesbares Medium nach Anspruch 12, das ferner Anweisungen umfasst, die, wenn sie ausgeführt werden, das BIOS (108) veranlassen, eine Aktivierung der Funktion auf der Basis eines Abonnements für einen Zugang zu der Funktion zu autorisieren.

15. Nichtflüchtiges greifbares computerlesbares Medium nach Anspruch 14, wobei die Registrierungsnachricht (112) ein Ablaufdatum für das Abonnement umfasst.

## Revendications

1. Dispositif électronique (102), comprenant :
un système d'entrée/sortie de base, BIOS, (108) ; et
un processeur (106) pour :
recevoir un message d'inscription (112) pour une fonction du dispositif électronique (102) en provenance d'un serveur (104) ; et
envoyer le message d'inscription (112) au BIOS (108), dans lequel le BIOS (108) doit :
stocker le message d'inscription (112) dans une mémoire de BIOS (110) ;
vérifier le message d'inscription (112) en réponse à une demande d'activation de fonction provenant du processeur (106) ; et
envoyer, au processeur (106), une réponse d'activation de fonction sur la base d'une vérification du message d'inscription (112),
dans lequel le processeur (106) doit activer la fonction sur le dispositif électronique (102) dans un cas où la réponse d'activation de fonction provenant du BIOS (108) indique que la vérification du message d'inscription (112) a réussi, permettant ainsi au dispositif électronique (102) de réaliser la fonction activée.

2. Dispositif électronique (102) selon la revendication 1, dans lequel le processeur (106) doit :
demander, depuis le BIOS (108), un identifiant unique pour le dispositif électronique (102) stocké dans la mémoire de BIOS (110) ; et
envoyer une demande d'inscription pour la fonction qui comporte l'identifiant unique au serveur (104), dans lequel le serveur (104) doit envoyer le message d'inscription (112) en réponse à la détermination du fait que l'identifiant unique remplit les conditions requises pour l'activation de la fonction.

3. Dispositif électronique (102) selon la revendication 1, dans lequel le message d'inscription (112) comprend une signature signée avec une clé privée stockée sur le serveur (104).

4. Dispositif électronique (102) selon la revendication 3, dans lequel le BIOS (108) doit stocker le message d'inscription (112) en réponse à la vérification de la signature du message d'inscription (112) avec une clé publique stockée dans la mémoire de BIOS (110).

5. Dispositif électronique (102) selon la revendication 1, dans lequel le processeur (106) doit communiquer avec le BIOS (108) par l'intermédiaire d'une interface privée d'instrumentation de gestion Windows, WMI.

6. Dispositif électronique (202), comprenant :
un processeur (206) ;
un dispositif de commande (218) comprenant une mémoire de dispositif de commande (220) ; et
un système d'entrée/sortie de base, BIOS, (208), pour :
recevoir, depuis le processeur (206), un message d'inscription (212) pour une fonction du dispositif électronique (202), le message d'inscription (212) étant envoyé au processeur (206) à partir d'un serveur (204) ;
envoyer le message d'inscription (212) au dispositif de commande (218) pour stockage dans la mémoire de dispositif de commande (220) ;
recevoir, depuis le processeur (206), une demande d'activation de fonction ;
vérifier le message d'inscription (112) en réponse à la demande d'activation de fonction provenant du processeur (206) ; et
envoyer, au processeur (206), une réponse d'activation de fonction sur la base d'une vérification du message d'inscription (212),
dans lequel le processeur (206) doit activer la fonction sur le dispositif électronique (202) dans un cas où la réponse d'activation de fonction provenant du BIOS (208) indique que la vérification du message d'inscription (212) a réussi, permettant ainsi au dispositif électronique (202) de réaliser la fonction activée.

7. Dispositif électronique (202) selon la revendication 6, dans lequel, lors de la réception de la demande d'activation de fonction provenant du processeur (206), le BIOS (208) doit :
récupérer le message d'inscription (212) provenant de la mémoire du dispositif de commande (220) ;
vérifier une signature du message d'inscription (212) sur la base d'une clé publique ; et
envoyer la réponse d'activation de fonction au processeur (206) en réponse à la vérification de la signature du message d'inscription (212).

8. Dispositif électronique (202) selon la revendication 6, le message d'inscription (212) comprend une date d'expiration.

9. Dispositif électronique (202) selon la revendication 8, dans lequel le BIOS (208) doit vérifier le message d'inscription (212) sur la base de la date d'expiration.

10. Dispositif électronique (202) selon la revendication 6, dans lequel le processeur (206) doit activer la fonction en réponse à la vérification du message d'inscription (212) par le BIOS (208).

11. Dispositif électronique (202) selon la revendication 6, dans lequel le processeur (206) doit bloquer l'accès à la fonction en réponse au fait que le BIOS (208) ne parvient pas à vérifier le message d'inscription (212).

12. Support tangible non transitoire lisible par ordinateur
comprenant des instructions lorsqu'elles sont exécutées amènent un système d'entrée/sortie de base, BIOS, (108) d'un dispositif électronique (102) à :
recevoir, depuis un processeur (106) du dispositif électronique (102), un message d'inscription (112) pour une fonction du dispositif électronique (102), le message d'inscription (112) étant envoyé au processeur (106) à partir d'un serveur (104) ;
enregistrer le message d'inscription (112) dans une mémoire de BIOS (110) du dispositif électronique (102) ;
recevoir, depuis le processeur (106), une demande d'activation de fonction ;
vérifier le message d'inscription (112) en réponse à la demande d'activation de fonction provenant du processeur (106) ; et
envoyer, au processeur (106), une réponse d'activation de fonction sur la base d'une vérification du message d'inscription (112),
dans lequel le processeur (106) active la fonction sur le dispositif électronique (102) dans un cas où la réponse d'activation de fonction provenant du BIOS (108) indique que la vérification du message d'inscription (112) a réussi, permettant ainsi au dispositif électronique (102) de réaliser la fonction activée.

13. Support tangible non transitoire lisible par ordinateur selon la revendication 12, comprenant en outre des instructions qui, lorsqu'elles sont exécutées, amènent le BIOS (108) à autoriser l'activation de la fonction sur la base d'un paiement pour accéder à la fonction.

14. Support tangible non transitoire lisible par ordinateur selon la revendication 12, comprenant en outre des instructions qui, lorsqu'elles sont exécutées, amènent le BIOS (108) à autoriser l'activation de la fonction sur la base d'un abonnement pour accéder à la fonction.

15. Support tangible non transitoire lisible par ordinateur selon la revendication 14, dans lequel le message d'inscription (112) comprend une date d'expiration pour l'abonnement.
